# EUROPEAN PATENT APPLICATION

(11) **EP 4 757 033 A1**
(43) Date of publication of application: **10.06.2026**
(21) Application number: 25816599.2
(22) Date of filing: 20.02.2025
(51) Int. Cl.: H01M 50/244, H01M 50/211, H01M 10/6551, H01M 10/613, H01M 10/6554, H01M 10/42, H01M 50/367, H01M 50/383

(54) **BATTERY PACK AND DEVICE INCLUDING SAME**

(30) Priority: 28.05.2024 KR 20240069318
(71) Applicant: LG Energy Solution, Ltd., Seoul 07335 (KR)
(72) Inventor: JUNG, Seyun, Daejeon 34122 (KR); KIM, Kyungwoo, Daejeon 34122 (KR); LEE, Inje, Daejeon 34122 (KR); BAEK, Yunseon, Daejeon 34122 (KR); PARK, Jonghee, Daejeon 34122 (KR)
(74) Representative: Plasseraud IP
(86) International application number: PCT/KR2025/099480
(87) International publication number: WO 2025/249996

(57) **Abstract**

A battery pack according to one specific embodiment of the present disclosure comprises: a plurality of battery cells that are stacked along one direction; cell frames that extend along edges of the battery cells and cover edges of the battery cells; and a pack frame in which the battery cells are stored, wherein the battery cells are mounted directly to the pack frame in such a state that the edges of the battery cells are covered by the cell frames.

## Description

### [TECHNICAL FIELD]

### Cross-Reference to Related Application(s)

This application claims priority to and the benefit of Korean Patent Application no. KR10-2024-0069318, filed on May 28, 2024, with the Korean Intellectual Property Office, the disclosure of which is incorporated herein by reference in its entirety.

The present disclosure relates to a battery pack and a device including the same, and more particularly, to a battery pack capable of minimizing thermal runaway transition, preventing structural collapse, and enhancing space utilization, and a device including the same.

### [BACKGROUND ART]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the necessity for development of the secondary battery is increasing.

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery mainly uses lithium-based oxide and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator being interposed between them, and an exterior material or a battery case which hermetically seal and store the electrode assembly together with an electrolyte.

Generally, the lithium secondary battery may be classified based on the shape of the exterior material into a can type secondary battery in which the electrode assembly is built in a metal can, and a pouch-type secondary battery in which the electrode assembly is built in a pouch of an aluminum laminate sheet.

In the case of a secondary battery used for small-sized devices, two to three battery cells are disposed, but in the case of a secondary battery used for a medium- and large-sized device such as automobiles, a battery module in which a plurality of battery cells are electrically connected is used. In such a battery module, a plurality of battery cells are connected to each other in series or parallel to form a cell assembly, thereby improving capacity and output. Further, one or more battery modules can be mounted together with various control and protection systems such as a BDU (battery disconnect unit), a BMS (battery management system), and a cooling system to form a battery pack.

That is, a battery pack may include a battery module as a subordinate concept thereof, and the battery module may include a battery cell as a subordinate concept thereof. In addition, the number of battery cells included in the battery module or the number of battery modules included in the battery pack may be variously determined according to the output or capacity of the battery pack required for an electric vehicle.

However, this conventional battery pack model does not have good space utilization. This is because the battery pack has a structure in which battery modules are formed with battery cells and these battery modules are mounted on a pack frame to realize a battery pack. Therefore, it is necessary to develop a battery pack structure that can enhance space utilization and ultimately improve energy density.

Meanwhile, recently, important items required for battery modules or battery packs are quick charge and thermal propagation control.

First, one of the problems of quick charge is the heat generated at quick charge. In other words, for quick charging, a cooling system is essentially required to manage the heat generated during the process to an appropriate level. Conventional battery modules uses an edge cooling structure that cools only one side (usually a lower side) of the battery cells. When quick charge is applied to a battery module with an edge cooling structure, the temperature difference between the upper and lower parts increases, and in the case of the upper part where the cooling effect is insufficient, the quick charge efficiency will inevitably decrease. Therefore, securing effective cooling performance may be very important for quick charge.

Next, with regard to thermal propagation control, when a thermal event occurs in any one of the battery cells included in the battery pack, it is necessary to block thermal propagation of this thermal event to other battery cells.

If thermal propagation between battery cells is not properly inhibited, this may lead to a thermal event in other battery cells included in the battery pack, which may cause a bigger problem, such as ignition or explosion of the battery pack. Furthermore, ignition or explosion generated in the battery pack may cause great damage to the lives or property of humans in the surrounding area. Therefore, such battery packs require a configuration that can appropriately control the above-mentioned thermal event and the propagation of this thermal event.

Taken together, there is a growing demand for a battery pack that is provided with effective cooling means for quick charge as well as means capable of inhibiting thermal propagation between battery cells, thereby enhancing the utilization of an internal space and improving an energy density.

### [DETAILED DESCRIPTION OF THE INVENTION]

### [Technical Problem]

It is an object of the present disclosure to provide a battery pack that is provided with effective cooling means for quick charge as well as means capable of inhibiting thermal propagation between battery cells, thereby enhancing the utilization of an internal space, and a device including the same.

However, the technical objects to be solved by embodiments of the present disclosure are not limited to the above-described objects, and can be variously expanded within the scope of the technical idea included in the present disclosure.

### [Technical Solution]

According to certain aspects of the present disclosure, there is provided a battery pack comprising: a plurality of battery cells that are stacked along one direction; cell frames that extend along edges of the battery cells and cover edges of the battery cells; and a pack frame in which the battery cells are stored, wherein the battery cells are mounted directly to the pack frame in such a state that the edges of the battery cells are covered by the cell frames.

One of the cell frames may cover the edges of the plurality of battery cells. The plurality of battery cells covered by one of the cell frames may be located along a longitudinal direction, and the longitudinal direction may be a direction parallel to the direction in which electrode leads protrude from the battery cells.

The cell frames may include a first frame that covers the lower end part of the battery cells; a third frame that covers one end part of any one of the battery cells; and a fourth frame that covers one end part of the other of the battery cells.

A portion corresponding to the upper end part of the battery cells among the cell frames may be opened, a thermal resin layer formed by applying thermal resin may be located one an upper part of the battery cells, and the upper end part of the battery cells may be in contact with the thermal resin layer.

The cell frame may include a first frame that covers the lower end part of the battery cells; and a third frame and a fourth frame that cover both end parts of the battery cells, respectively.

The cell frame may include a second frame that covers the upper end part of the battery cell.

A cell vent part may be formed in a portion corresponding to the lower end part of the battery cells among the cell frames.

The pack frame may include a bottom frame in which the battery cells are placed and a venting space is provided, and the cell vent part may communicate with the venting space of the bottom frame while the venting gas is discharged from the battery cells.

An adhesive member may be attached to a portion excluding a portion corresponding to the cell vent part among the lower end part of the battery cell.

The battery cell may include an electrode assembly and a pouch case that stores the electrode assembly. The lower end part of the battery cell may be a sealing part formed by sealing the end part of the pouch case.

While adjacent cell frames are coupled to each other, the battery cells located therein may be fixed.

At least one cooling plate may be disposed in at least one place between the battery cells.

A thermal resin layer formed by applying a thermal resin may be located on the upper part of the battery cells, and the upper end part of the cooling plate may be in contact with the thermal resin layer.

The battery cells may be stacked along the one direction to form a battery cell stack. The pack frame may include a bottom frame on which the battery cell stack is placed and a side surface frame extending upward from one end part of the bottom frame. The side surface frame may be located on one side surface of the battery cell stack, and a BMS frame on which a BMS (Battery Management System) module is mounted may be located on the other side surface opposite to the one side surface of the battery cell stack.

The side surface frame and the BMS frame may press the one side surface and the other side surface of the battery cell stack, respectively.

According to certain other aspects of the present disclosure, there is provided a device comprising the above-mentioned battery pack.

### [Advantageous Effects]

According to certain embodiments of the present disclosure, surface cooling of the battery cells can be performed by a cell frame covering the edges of the battery cells and a cooling plate disposed between the battery cells, thereby improving cooling performance.

Also, when a thermal event occurs in a battery cell, high-temperature venting gas, particles or the like emitted from the battery cells move along a specific intended path through a cell vent provided in the cell frame. This makes it possible to minimize propagation of a thermal event generated in a specific battery cell to other battery cells.

In addition, since the battery cells are mounted directly to the pack frame in such a state that the edges of the battery cells are covered by the cell frame, the packing structure can be minimized, thereby improving the space utilization and energy density of the battery pack.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIG. 1 is a perspective view showing a battery pack according to one specific embodiment of the present disclosure.
FIG. 2 is a perspective view showing one of the battery cell units included in the battery pack of FIG. 1.
FIG. 3 is a perspective view showing a state in which some battery cells and cooling plates are separated from the battery cell unit of FIG. 2.
FIG. 4 is a perspective view showing battery cells and a cell frame according to one specific embodiment of the present disclosure.
FIG. 5 is an exploded perspective view of the battery cells and the cell frame of FIG. 4.
FIG. 6 is a perspective view showing a battery cell according to one specific embodiment of the present disclosure.
FIGS. 7(a) and (b) are cross-sectional perspective views of a battery cell coupled to a cell frame, respectively.
FIG. 8 is a cross-sectional perspective view of a battery cell coupled to a cell frame.
FIG. 9 is a perspective view showing a cell frame according to one specific embodiment of the present disclosure.
FIG. 10 is a perspective view showing a state in which two cell frames are coupled.
FIG. 11 is a perspective view showing a battery cell unit according to another specific embodiment of the present disclosure.
FIG. 12 is a perspective view showing a state in which some battery cells and cooling plates are separated from the battery cell unit of FIG. 11.
FIG. 13 is a perspective view showing some of the battery cells and cell frames included in the battery cell unit of FIG. 11.
FIG. 14 is an exploded perspective view of the battery cells and cell frames of FIG. 13.
FIG. 15 is an exploded perspective view of the battery cells and cell frames according to yet another specific embodiment of the present disclosure.
FIG. 16 is a perspective view showing a battery cell unit and a thermal resin layer together according to one specific embodiment of the present disclosure.
FIG. 17 is a cross-sectional view showing a cross section taken along the cutting line A-A of FIG. 16.
FIG. 18 is a perspective view showing a heat sink and a thermal resin layer according to one specific embodiment of the present disclosure.
FIG. 19 is a perspective view showing a heat sink and a pad member according to one specific embodiment of the present disclosure.
FIG. 20 is a front view showing the heat sink and the pad member of FIG. 19.
FIG. 21 is a front view showing the heat sink, the pad member, and some cell frames.
FIG. 22 is a perspective view of a battery cell unit according to one specific embodiment of the present disclosure, as viewed from below.
FIG. 23 is a perspective view showing a pack frame included in a battery pack according to one specific embodiment of the present disclosure.
FIG. 24 is a perspective view showing a bottom frame and a side surface frame included in the pack frame of FIG. 23.
FIG. 25 is a cross-sectional perspective view taken along the cutting line B-B of FIG. 24.
FIG. 26 is a perspective view showing a BMS frame included in the pack frame of FIG. 23.
FIGS. 27 and 28 are diagrams for explaining a method of disposing battery cell units in a pack frame.
FIG. 29 is a perspective view showing a pack frame according to another specific embodiment of the present disclosure.
FIG. 30 is a perspective view showing a bottom frame included in the pack frame of FIG. 29.
FIG. 31 is a perspective view showing an inner frame and cover plates included in the bottom frame of FIG. 30.
FIG. 32 is a partially enlarged diagram showing a portion "C" of FIG. 31.
FIG. 33 is a perspective view showing a state in which a part of the inner frame is removed in the bottom frame of FIG. 30.
FIG. 34 is a perspective view showing an outer frame and routing plates of the bottom frame of FIG. 30.
FIG. 35(a) is a partial diagram showing an outer frame hole, and FIG. 35 (b) is a partial diagram showing a venting device coupled to the outer frame hole.
FIG. 36 is a partial cross-sectional view of a battery pack according to one specific embodiment of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

Portions that are irrelevant to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

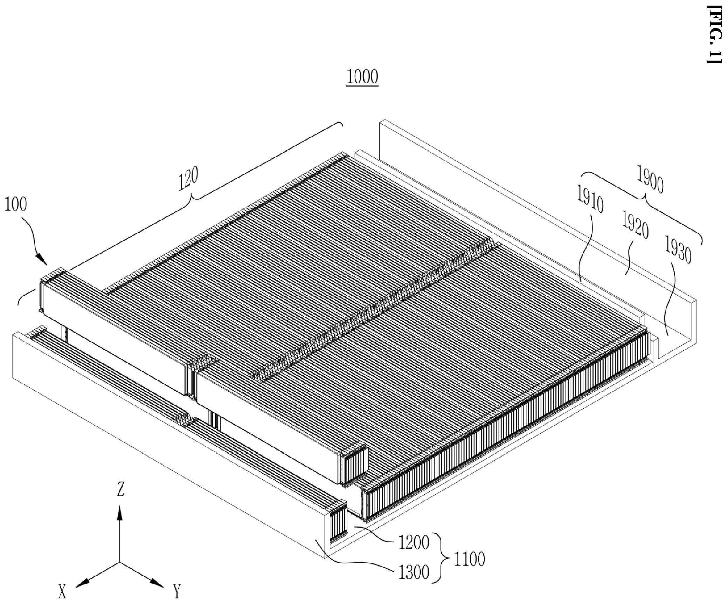

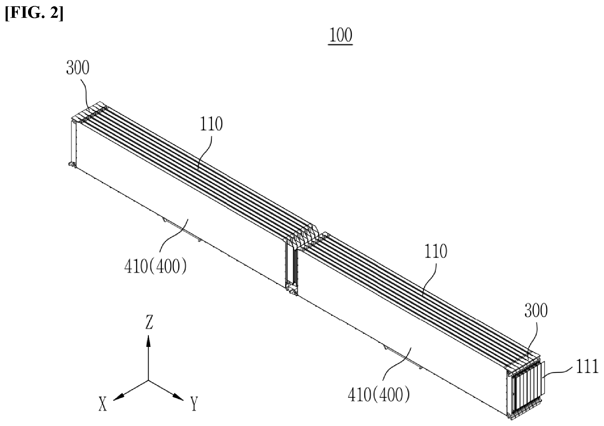

FIG. 1 is a perspective view showing a battery pack according to one specific embodiment of the present disclosure. FIG. 2 is a perspective view showing one of the battery cell units included in the battery pack of FIG. 1.

Referring to FIGS. 1 and 2, a battery pack 1000 according to one specific embodiment of the present disclosure includes a plurality of battery cells 110 stacked along one direction; cell frames 300 that extend along edges of the battery cells 110 and cover edges of the battery cells 110; and a pack frame 1100 in which the battery cells 110 are stored. The battery cells 110 are mounted directly to the pack frame 1100 in such a state that the edges of the battery cells 110 are covered by the cell frames 300.

Specifically, the battery cells 110 may be stacked in one direction while each of the battery cells 110 is covered by the cell frame 300, thereby forming the battery cell stack 120. That is, a cell frame 300 may be provided for each of the battery cells 110. As an example, each of the battery cells 110 may be stacked along a direction parallel to the X-axis while being covered by a cell frame 300, thereby forming a battery cell stack 120. The detailed structure of the cell frame 300 will be described later.

Further, some of the battery cells 110 covered by the cell frame 300 may form a battery cell unit 100. The battery cells 110 may be mounted as a unit of battery cell units 100 in the pack frame 1100. In other words, some of the battery cells 110 may be gathered to form a battery cell unit 100, and such battery cell units 100 may be gathered to form a battery cell stack 120. In this specification, a unit in which some of the battery cells 110 are gathered is referred to as a battery cell unit 100, and the whole of the battery cells 110 stacked inside the battery pack 1000 is referred to as a battery cell stack 120.

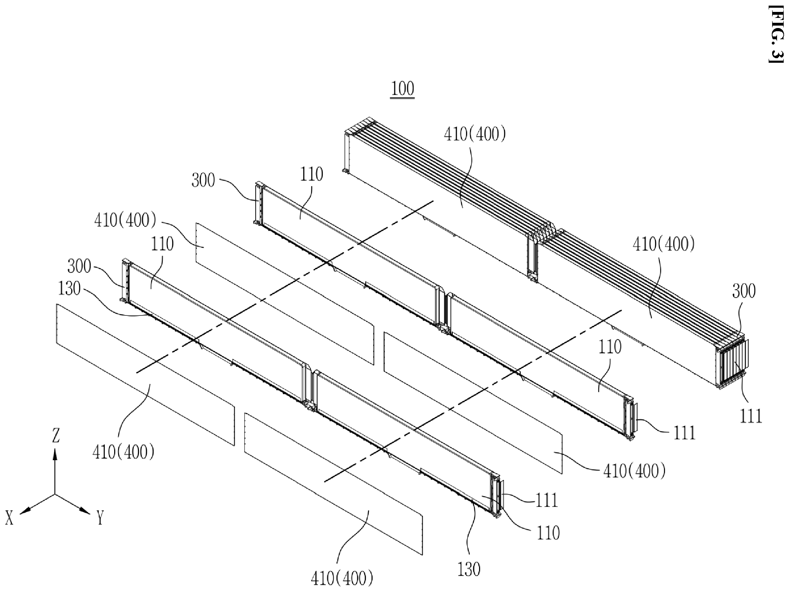

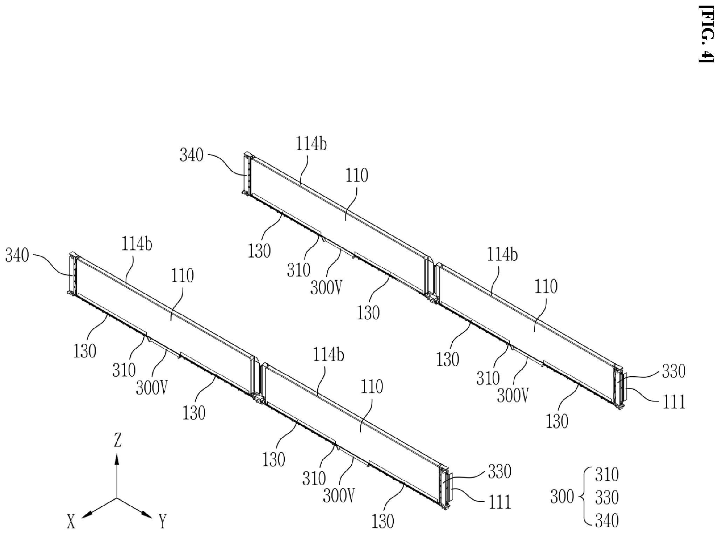

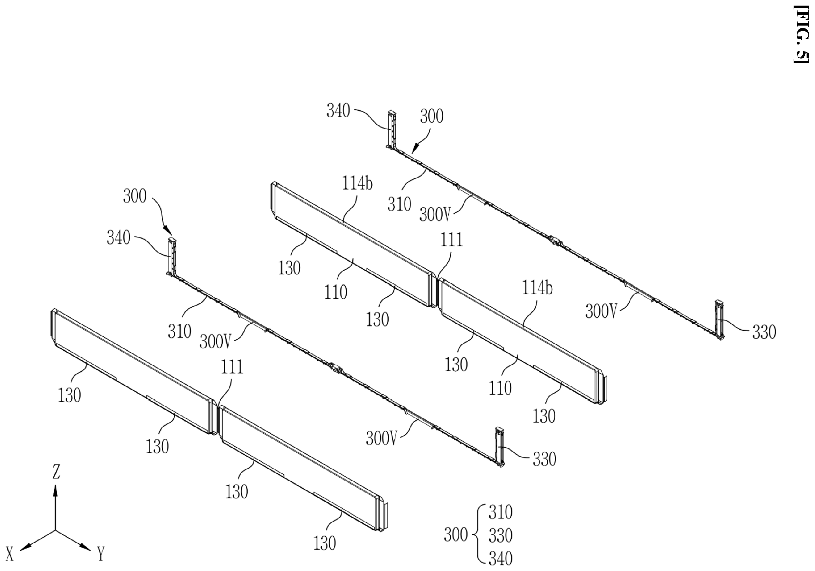

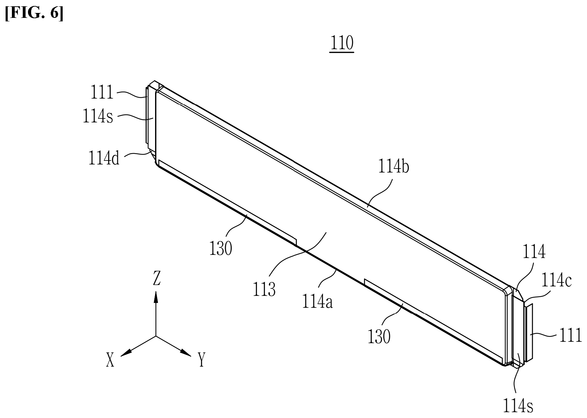

FIG. 3 is a perspective view showing a state in which some battery cells and cooling plates are separated from the battery cell unit of FIG. 2. FIG. 4 is a perspective view showing battery cells and a cell frame according to one specific embodiment of the present disclosure. FIG. 5 is an exploded perspective view of the battery cells and the cell frame of FIG. 4. FIG. 6 is a perspective view showing a battery cell according to one specific embodiment of the present disclosure.

Referring to FIGS. 3 to 6, the battery cells 110 according to this embodiment may be various forms of battery cells, and as an example, the battery cell 110 according to this embodiment may be a pouch-type battery cell as shown in FIGS. 4 to 6. Although a pouch-type battery cell will be described below, the battery cell 110 according to this embodiment is not limited thereto and various types of battery cells can be applied.

The battery cell 110 according to this embodiment may have a form in which an electrode assembly having electrode leads 111 protruding in one direction or both directions is stored in a pouch case 114. The battery cell 110 may have a rectangular sheet shape. The battery cell 110 may have a lower end part 114a, an upper end part 114b, and both end parts 114c, 114d.

The battery cell 110 may be formed by housing an electrode assembly in a pouch case 114 made of a laminate sheet including a resin layer and a metal layer, and then adhering the outer peripheral part of the pouch case 114. As an example, the battery cell 110 may have a structure in which two electrode leads 111 face each other and protrude from one end part 114c and the other end part 114d of the cell main body 113. As another example, a structure in which all the electrode leads 111 of the battery cells 110 protrude in one direction is also possible. One of the electrode leads 111 is a positive electrode lead, and the other is a negative electrode lead.

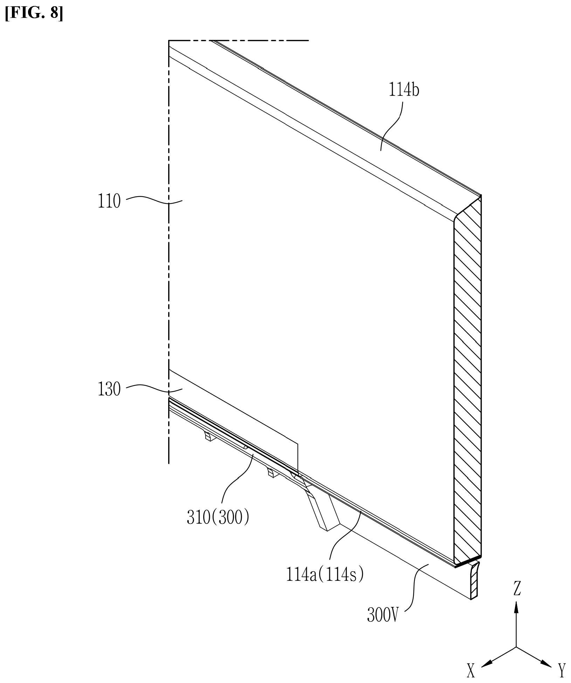

The battery cell 110 may be produced by adhering the both end parts 114c, 114d of the pouch case 114 and the lower end part 114a connecting them in a state in which the electrode assembly (not shown) is stored in the pouch case 114. In other words, the battery cell 110 according to one specific embodiment of the present disclosure has a total of three sealing parts 114s, wherein the sealing parts 114s have a structure that is sealed by a method such as fusion, and the remaining upper end part 114b may be composed of a folding part. That is, the battery cell 110 according to this embodiment may be a pouch-type secondary battery in which the electrode assembly is stored inside the pouch case 114 and the outer peripheral side of the pouch case 114 is sealed to form a sealing part 114s. In FIG. 6, only a state where the sealing parts 114s are formed at both end parts 114c, 114d of the pouch case 114 is shown, and no sealing parts are shown at the lower end part 114a, but the sealing part of the lower end part 114a is in a state of being folded to one side after the sealing is completed for space utilization. This will be described again in FIG. 8.

The pouch case 114 of the laminate sheet may include an inner resin layer for sealing, a metal layer for preventing penetration of materials, and an outer resin layer located on the outermost side. Based on the electrode assembly inside the pouch case 114, the inner resin layer may be located on the innermost side, the outer resin layer may be located on the outermost side, and the metal layer may be located between the inner resin layer and the outer resin layer.

The outer resin layer has excellent tensile strength and weather resistance relative to the thickness and can exhibit electrical insulation properties in order to protect the electrode assembly from the outside. Such an outer resin layer may include a polyethylene terephthalate (PET) resin or a nylon resin. The metal layer can prevent air, moisture, and the like from flowing into the inside of the pouch-type secondary battery. This metal layer may include aluminum (Al). The inner resin layers may be thermally fused to each other by heat and/or pressure applied in a state in which the electrode assembly is built in. This inner resin layer may include casted polypropylene (CPP) or polypropylene(PP).

The pouch case 114 is portioned into two portions, and a concave-shaped storage part in which the electrode assembly can be seated may be formed in at least one of the two portions. Along the outer circumference of this storage part, the inner resin layers of the two portions of the pouch case 114 may be bonded to each other to form a sealing part 114s. In this manner, the pouch case may be sealed to provide a battery cell 110, which is a pouch-type secondary battery.

Meanwhile, referring to FIG. 6, the portion of the sealing parts 114s at both end parts 114c, 114d of the battery cell 110 where the electrode lead 111 protrudes from the battery cell 110 corresponds to the so-called terrace part of the battery cell 110. This terrace part is thinner than the cell main body 113 of the battery cell 110.

As described above, some of the battery cells 110 covered by the cell frame 300 may form a battery cell unit 100. As an example, a plurality of battery cells 110 may be stacked along one direction so as to be electrically connected to each other, thereby forming a battery cell unit 100. As an example, a plurality of battery cells 110 may be stacked along a direction parallel to the X-axis while standing upright. Thereby, the electrode leads 111 may protrude in a direction perpendicular to the direction in which the battery cells 110 are stacked. In the battery cell 110, one electrode lead 111 may protrude in the Y-axis direction, and the other electrode lead 111 may protrude in the -Y-axis direction. If the electrode leads 111 are battery cells protruding toward only one direction, the electrode leads 111 may protrude in the Y-axis direction or the -Y-axis direction.

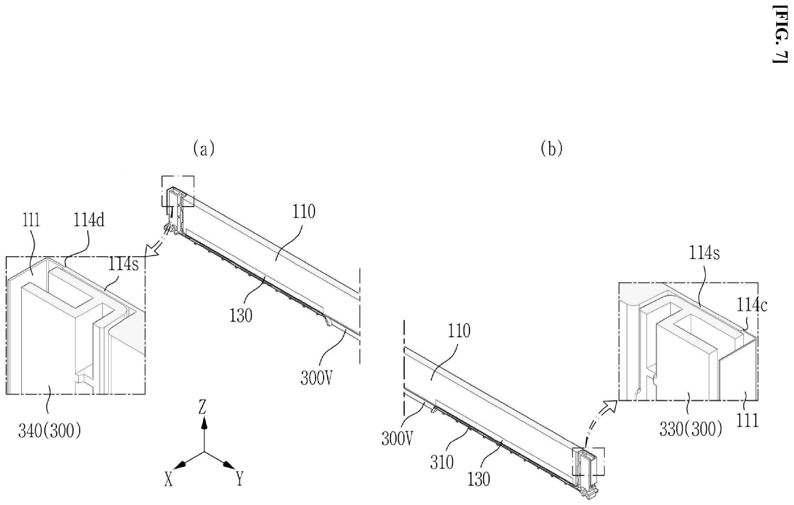

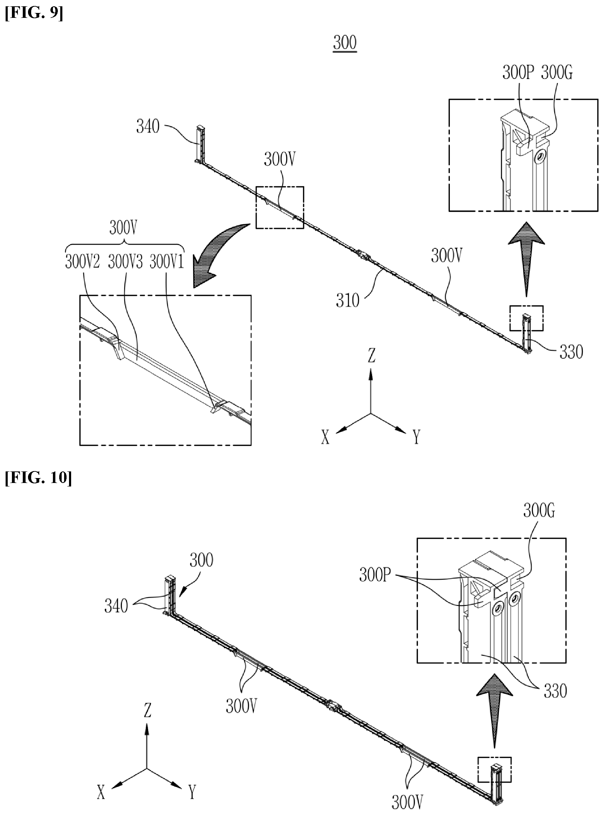

FIGS. 7 (a) and (b) are cross-sectional perspective views of a battery cell coupled to a cell frame, respectively. FIG. 8 is a cross-sectional perspective view of a battery cell coupled to a cell frame. Specifically, each of FIGS. 7(a) and (b) is a cross-sectional perspective view of battery cells coupled to a cell frame, the both end parts of which are enlarged after the battery cell is cut along the xy plane, and FIG. 8 is a cross-sectional perspective view of battery cells coupled to a cell frame, which is cut along the xz plane. FIG. 9 is a perspective view showing a cell frame according to one specific embodiment of the present disclosure. FIG. 10 is a perspective view showing a state in which two cell frames are coupled.

Referring to FIGS. 4 to 10 together, the cell frame 300 according to this embodiment may extend along the edge of the battery cell 110 and cover the edge of the battery cell 110. One cell frame 300 may cover the edges of the plurality of battery cells 110. The plurality of battery cells 110 covered by one cell frame 300 may be located along the longitudinal direction, wherein the longitudinal direction may be a direction parallel to the direction in which the electrode lead 111 protrudes from the battery cell 110. That is, the battery cells 110 located within one cell frame 300 may be located along the Y-axis direction, which is a direction parallel to the direction in which the electrode lead 111 protrudes. The number of battery cells 110 located within one cell frame 300 is not particularly limited. As an example, FIGS. 4 and 5 show that one cell frame 300 covers two battery cells 110.

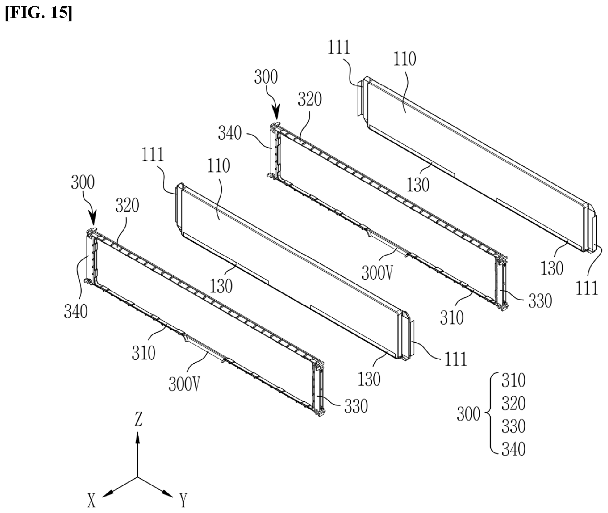

Specifically, the cell frame 300 may include a first frame 310 that covers the lower end part 114a of the battery cells 110; a third frame 330 that covers one end part 114c of any one of the battery cells 110; and a fourth frame 340 that covers one end part 114d of the other of the battery cells 110. Unlike the cell frame which will be described later in FIG. 15, the cell frame 300 according to this embodiment may have a form in which an upper end part is opened without a portion covering the upper end part 114b of the battery cell 110. That is, the cell frame 300 may have a form in which a portion corresponding to the upper end part 114b of the battery cell 110 is opened.

Meanwhile, a cell vent part 300V may be formed in a portion corresponding to the lower end part 114a of the battery cell 110 among the cell frame 300. The cell vent part 300V may be formed in the first frame 310 among the cell frame 300. Specifically, the cell vent part 300V may be a portion that guides discharge of high-temperature venting gas or particles generated from the battery cell 110 when a thermal event or thermal runaway occurs in any one of the battery cells 110. This cell vent part 300V may be provided in a portion corresponding to the central part of each battery cell 110 among the first frame 310 covering the lower end part 114a of the battery cell 110. As an example, FIG. 5 shows that two cell vent parts 300V are provided in the first frame 310. One of the two cell vent parts 300V may be provided in a portion corresponding to the central part of any one battery cell 110, and the other of the two cell vent parts 300V may be provided in a portion corresponding to the central part of the other battery cell 110.

As an example, the cell vent part 300V may include a first part 300V1, a second part 300V2, and a third part 300V3. While the first part 300V1, the second part 300V2, and the third part 300V3 are being extended in a downward direction, an opened space may be formed therebetween. However, this is only one exemplary structure of the cell vent part 300V, and is sufficient if it has an opened shape and can guide the discharge of high-temperature venting gas or particles generated from the battery cell 110, and the form thereof is not particularly limited.

A portion excluding the cell vent part 300V among the first frame 310 is in close contact with the lower end part 114a of the battery cell 110, but a portion corresponding to the cell vent part 300V is perforated in a downward direction, so that high-temperature venting gas or particles generated from the battery cell 110 can be discharged in a downward direction through the cell vent part 300V. That is, the battery module according to this embodiment has a directional venting structure that discharges venting gas, particles, and the like in a preset direction through the cell frame 300 having the cell vent part 300V. In particular, since the cell vent part 300V is formed in the portion corresponding to the lower end part 114a of the battery cell 110 among the cell frame 300, a so-called "bottom vent" structure in which venting gas, particles, and the like are discharged in a downward direction can be realized. The advantages of the "bottom vent" structure will be described again below.

Meanwhile, referring to FIGS. 4 to 8, an adhesive member 130 may be attached to a portion excluding a portion corresponding to the cell vent part 300V among the lower end part 114a of the battery cell 110. As described above, the lower end part 114a of the battery cell 110 may be a sealing part 114s (see FIGS. 6 and 8) where sealing of the pouch case 114 is performed, and the upper end part 114b of the battery cell 110 may not be a portion where the sealing is performed, but may be a folding part, which is a potion where the pouch case 114 is folded. In other words, the battery cell 110 may include an electrode assembly (not shown) and a pouch case 114 that stores the electrode assembly, and the lower end part 114a of the battery cell 110 may be a sealing part 114s formed by sealing the end part of the pouch case 114.

When a thermal event or thermal runaway occurs in the battery cell 110, venting gas is generated in the battery cell 110 and the internal pressure of the battery cell 110 increases. This venting gas may be discharged mainly through the sealing part 114s of the battery cell 110. That is, due to the increased internal pressure, the sealing may be released in some parts of the sealing part 114s, and the venting gas or the like may be discharged while bursting out through the released portion of the sealing part 114s.

According to this embodiment, the battery cell 110 may be disposed so that the lower end part 114a of the battery cell 110 becomes the sealing part 114s and the upper end part 114b of the battery cell 110 becomes the folding part. This configuration makes it possible to more clearly realize a "bottom vent" structure in which venting gas, particles, and the like generated in the battery cell 110 is discharged in a downward direction. FIG. 8 shows a state in which the sealing part 114s corresponding to the lower end part 114a of the battery cell 110 is folded for space utilization after sealing is completed.

Meanwhile, it is preferable that the venting gas of the battery cell 110 is discharged through the cell vent part 300V of the cell frame 300 even among the downward directions. For this purpose, an adhesive member 130 may be attached to a portion excluding a portion corresponding to the cell vent part 300V among the lower end part 114a of the battery cell 110. The adhesive member 130 may be, for example, an adhesive tape.

Since the portion to which the adhesive member 130 is attached among the lower end part 114a of the battery cell 110 has its sealing degree complemented by the adhesive member 130, the sealing is not released even if the internal pressure of the battery cell 110 increases. On the other hand, a portion to which the adhesive member 130 is not attached among the lower end part 114a of the battery cell 110 has a relatively low sealing degree, so that the sealing of the portion to which the adhesive member 130 is not attached may be released before the sealing of the portion to which the adhesive member 130 is attached is released. Thereby, the discharge of the venting gas can be guided to a portion corresponding to the cell vent part 300V (i.e., a portion without an adhesive member) among the lower end part 114a of the battery cell 110, and the venting gas may be discharged in a downward direction through the cell vent part 300V.

Referring again to FIGS. 3, 4, 5, 9 and 10, in the battery cell unit 100 according to this embodiment, while adjacent cell frames 300 are coupled to each other, the battery cells 110 located therein can be fixed. The coupling method between the cell frames 300 is not particularly limited, but coupling due to physical binding force can be performed. For example, each cell frame 300 may include a hook protrusion 300P and a hook groove 300G. The hook protrusion 300P may protrude in the direction in which the other adjacent cell frame 300 is located. The cell frames 300 can be coupled to each other in such a way that the hook protrusion 300P of any one cell frame 300 is hook-coupled to the hook groove 300G of the adjacent cell frame 300. The state in which this hook coupling is performed between two cell frames 300 is shown in FIG. 10. While the coupling between the hook protrusion 300P and the hook groove 300G is continuously performed for each adjacent cell frame 300, all of the plurality of cell frames 300 can be coupled.

Each battery cell 110 is covered by each cell frame 300, and these cell frames 300 may be coupled to each other to form a battery cell unit 100. In this manner, the battery cell unit 100 including the cell frames 300 is structurally more stable and can withstand even external vibrations or shocks better than the form in which only the battery cells 110 are stacked without the cell frames 300. When only the battery cells 110 are stacked to each other without the cell frames 300, there may be a problem in that the battery cell stack is not maintained by external vibrations or shocks and the shape collapses. Furthermore, in the case of a battery cell unit 100 or a battery cell stack 120 including a cell frame 300, since they are assembled as a unit of cell frames 300, replacement can be easily performed as a unit of cell frames 300. In other words, even after the manufacture of the battery cell unit 100 or the battery cell stack 120 has already been completed, there is an advantage that a specific battery cell 110 in which a problem has occurred can be easily replaced by disassembling and reassembling the cell frame 300.

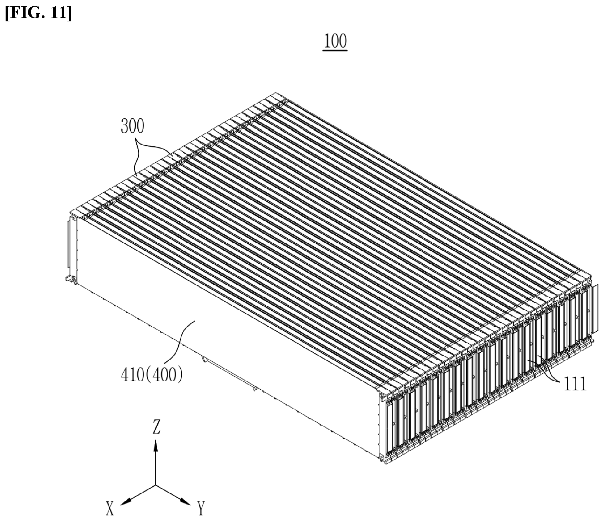

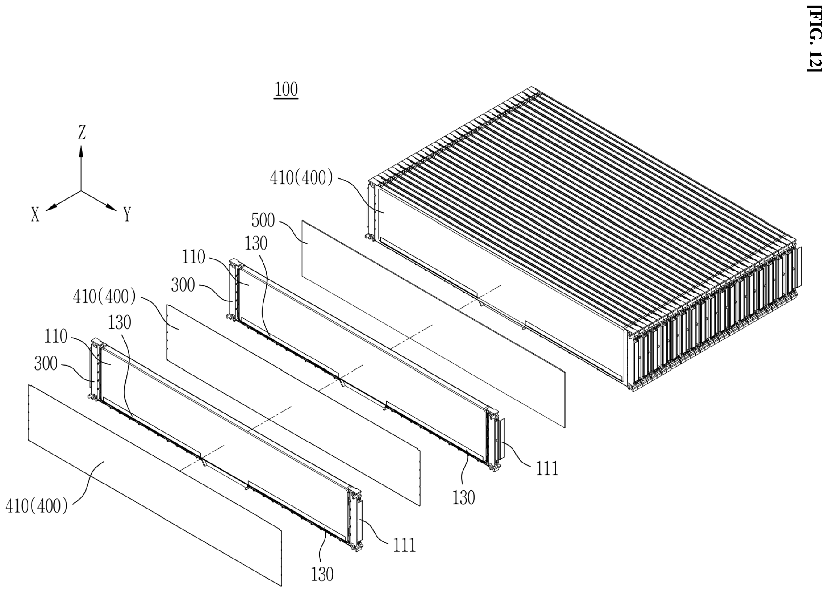

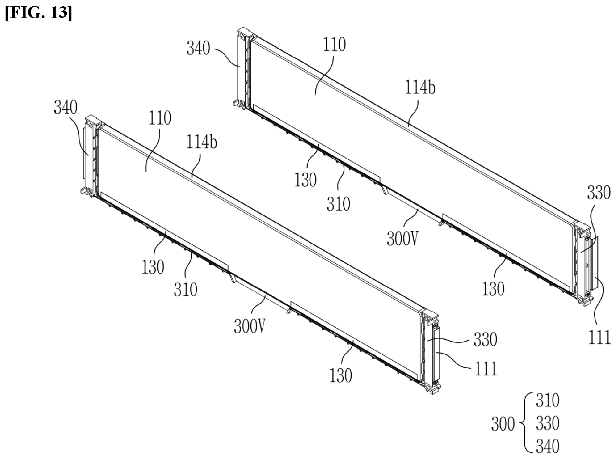

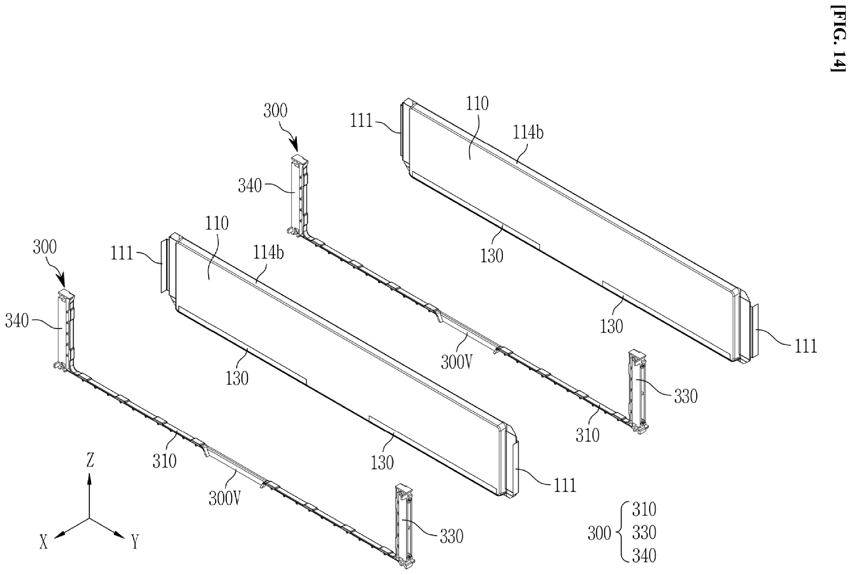

FIG. 11 is a perspective view showing a battery cell unit according to another specific embodiment of the present disclosure. FIG. 12 is a perspective view showing a state in which some battery cells and cooling plates are separated from the battery cell unit of FIG. 11. FIG. 13 is a perspective view showing some of the battery cells and cell frames included in the battery cell unit of FIG. 11. FIG. 14 is an exploded perspective view of the battery cells and cell frames of FIG. 13.

Referring to FIGS. 11 to 14, a battery cell unit 100 according to another specific embodiment of the present disclosure may include battery cells 110 and cell frames 300 that extend along the edges of the battery cells 110 and cover the edges of the battery cells 110. Unlike the embodiments of FIGS. 2 to 10 in which a plurality of battery cells 110 are mounted to one cell frame 300 described above, the cell frame 300 according to this embodiment may cover only the edge of one battery cell 110.

Specifically, the cell frame 300 according to this embodiment may include a first frame 310 that covers the lower end part 114a of the battery cell 110; and a third frame 330 and a fourth frame 340 that cover both end parts 114c, 114d of the battery cell 110, respectively. In this embodiment, while the battery cells 110 and the cell frame 300 correspond on one-to-one basis, each of the battery cells 110 may be covered by each of the cell frames 300. Unlike the cell frame which will be described later in FIG. 15, the cell frame 300 according to this embodiment may have a form in which an upper part is opened without a portion covering the upper end part 114b of the battery cell 110. That is, the cell frame 300 may have a form in which a portion corresponding to the upper end part 114b of the battery cell 110 is opened.

Further, the cell vent part 300V being formed in the first frame 310 among the cell frame 300 and the adhesive member 130 being attached to a portion excluding a portion corresponding to the cell vent part 300V among the lower part 114a of the battery cell 110 are equal or similar to the previously described embodiments, and therefore, a detailed description thereof will be omitted.

Further, in the battery cell unit 100, while adjacent cell frames 300 is coupled to each other, the battery cells 110 located therein can be fixed. The coupling method between the cell frames 300 is not particularly limited, but coupling due to physical binding force may be performed. For example, each cell frame 300 can include a hook protrusion 300P and a hook groove 300G. The specific description of the hook protrusion 300P and the hook groove 300G is equal or similar to the previously described embodiments and therefore, a detailed description thereof will be omitted.

FIG. 15 is an exploded perspective view of the battery cells and cell frames according to yet another specific embodiment of the present disclosure.

Referring to FIG. 15, the cell frame 300 according to this embodiment may extend along the edge of the battery cell 110 and cover the edge of the battery cell 110 in the same manner as the above. Further, a cell vent part 300V may be formed in a portion corresponding to the lower end part 114a of the battery cell 110 among the cell frame 300, and while adjacent cell frames 300 are coupled to each other, the battery cells 110 located therein can be fixed.

However, the cell frame 300 according to this embodiment includes a first frame 310 that covers the lower end part 114a of the battery cell 110; a second frame 320 that covers the upper end part 114b of the battery cell 110; and a third frame 330 and a fourth frame 340 that cover both end parts 114c, 114d of the battery cell 110, respectively. That is, the cell frame 300 of FIG. 15 may include a second frame 320 that covers the upper end part 114b of the battery cell 110, and thus may have a form in which a portion corresponding to the upper end part 114b of the battery cell 110 among the cell frame 300 is not opened.

The cooling plate and the thermal resin layer according to this embodiment will be described in detail below.

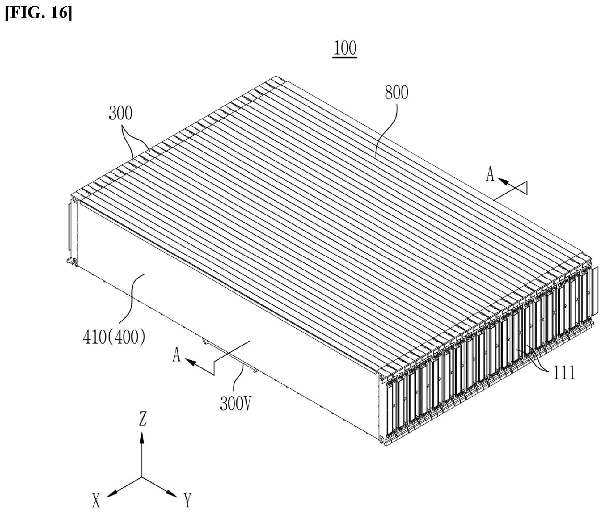

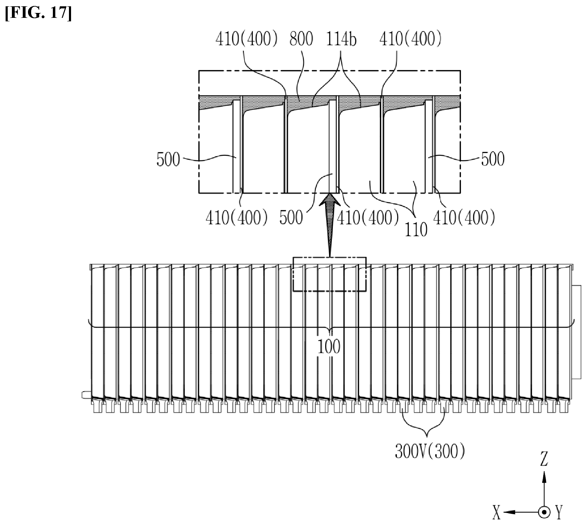

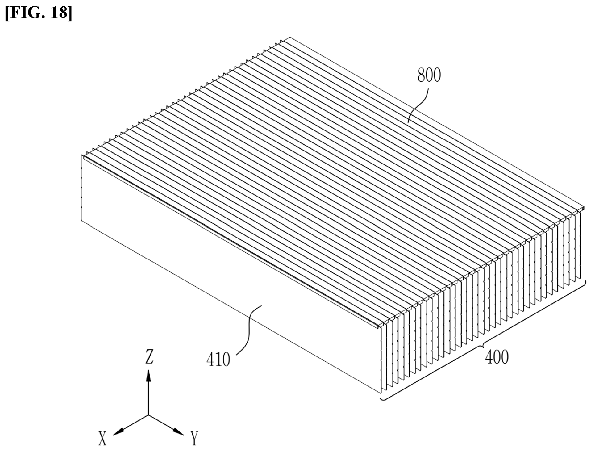

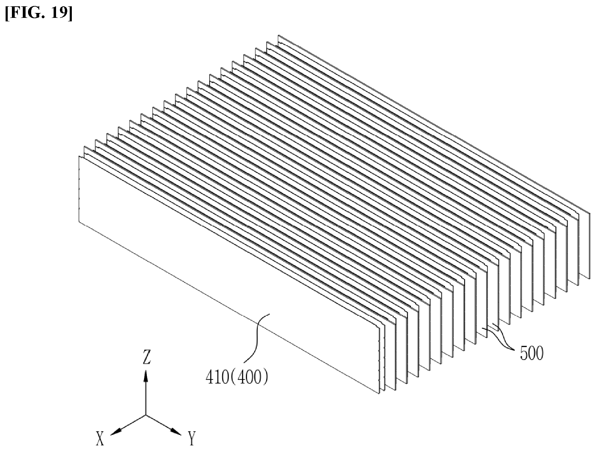

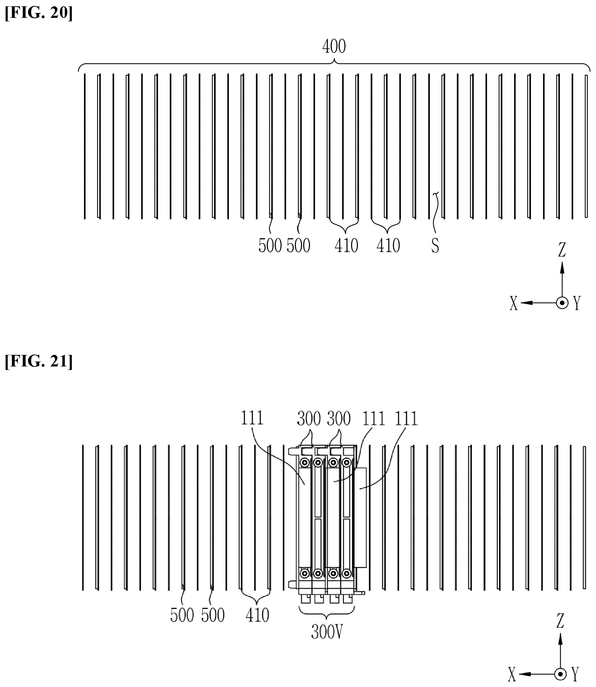

FIG. 16 is a perspective view showing a battery cell unit and a thermal resin layer together according to one specific embodiment of the present disclosure. FIG. 17 is a cross-sectional view showing a cross section taken along the cutting line A-A of FIG. 16. FIG. 18 is a perspective view showing a heat sink and a thermal resin layer according to one specific embodiment of the present disclosure. FIG. 19 is a perspective view showing a heat sink and a pad member according to one specific embodiment of the present disclosure. FIG. 20 is a front view showing the heat sink and the pad member of FIG. 19. FIG. 21 is a front view showing the heat sink, the pad member, and some cell frames.

Referring to FIG. 3 and FIGS. 16 to 21, at least one cooling plate 410 may be disposed in at least one place between the battery cells 110. The cooling plates 410 may be configured in a plurality of numbers, and in this specification, the plurality of cooling plates 410 are collectively referred to as a heat sink 400.

FIG. 3 shows that a cooling plate 410 is located adjacent to each of the battery cells 110 disposed along the longitudinal direction. FIGS. 16 to 20 also show that a cooling plate 410 is located adjacent to each of the battery cells 110.

The cooling plate 410 according to this embodiment may be a plate-shaped heat transfer member. Specifically, the battery cell 110 may be in surface contact with the cooling plate 410. At least one surface of the battery cell 110 may be in contact with the cooling plate 410. More specifically, one surface of the cooling plate 410 may be in contact with one surface of the cell main body 113 (see FIG. 6) of the battery cell 110. One surface of the battery cell 110 may be in contact with the cooling plate 410, or both surfaces of the battery cell 110 may be in contact with the cooling plate 410. That is, at least one surface of the battery cell 110 may be directly in surface contact with the cooling plate 410.

The material applied to the cooling plate 410 is not particularly limited as long as it is a material with high thermal conductivity. As an example, the cooling plate 410 may include a metal material, a graphite material or a plastic material that has excellent thermal conductivity. Among them, it may be most preferable to apply a graphite material to the cooling plate 410. The cooling plate 410 to which the graphite material is applied may be consistent with the design intent of the present disclosure because it exhibits the characteristics of high thermal conductivity, light weight, and low thermal expansion compared to other materials. Meanwhile, if the cooling plate 410 includes a metal material, an insulation treatment may be performed on the surface of the cooling plate 410, if necessary.

Meanwhile, according to this embodiment, a thermal resin layer 800 formed by applying thermal resin may be located on an upper part of the battery cells 110, and the upper end part of the cooling plate 410 may be in contact with the thermal resin layer 800. The thermal resin may include a thermally conductive adhesive material, and specifically, may include at least one of a silicone material, a urethane material, or an acrylic material. The thermal resin may be in a liquid state during application but may be cured after application. Further, the thermal resin layer has excellent thermal conduction characteristics, allowing heat generated in the battery cells 110 to be quickly discharged to the upper part of the battery module.

As described above, the cooling plate 410 has a plate-like shape and can cool the battery cell 110 by a surface cooling method. The heat generated in the battery cell 110 may discharged through the upper direction of the battery cell unit 100 or the battery cell stack 120 via the cooling plate 410 and the thermal resin layer 800 in sequence. In particular, the heat generated in the battery cell 110 can be finally transferred to the pack cover 1400 described below, and can be cooled by the pack cover 1400. The structure of the pack cover 1400 will be described below.

Conventional battery modules have an edge cooling structure in which a thermal resin layer is brought into contact only with the edge part of the battery cell, and this thermal resin layer is in direct/indirect contact with a heat sink, thereby discharging the heat of the battery cell. On the other hand, in this embodiment, a surface cooling structure may be used in which a cooling plate 410 with excellent thermal conductivity is in contact with one surface of the cell body 113 (see FIG. 6) of the battery cell 110 while being interposed between the battery cells 110. Since one surface of the cell main body 113 (see FIG. 6) of the battery cell 110 may be abutted on one surface of the cooling plate 410, the cooling area is much wider, which provides an advantage of superior cooling performance compared to the conventional battery module.

Recently, quick charge is required for battery modules as an essential item, but one of the problems of quick charge is the heat generated in quick charge. For quick charging, a cooling system is essentially required to manage the heat generated during the process to an appropriate level. When quick charge is applied to a battery module with a conventional edge cooling structure, the temperature difference between the upper and lower parts increases, and in the case of the upper part where the cooling effect is insufficient, the quick charge efficiency will inevitably decrease. On the other hand, in the battery pack according to this embodiment, the cooling plate 410 is in surface contact with the battery cells 110 and directly cools the battery cells 110, it can have excellent cooling performance enough to control the heat generated during quick charge.

The number or size of the cooling plates 410 is not particularly limited as long as surface cooling can be performed on the battery cells 110. The number of the cooling plates 410 can be appropriately changed in consideration of the size, capacity, heat generation, and the like of the battery pack 1000. Further, if it can cover 60% or more of the area of one surface of the battery cell 110, the area of the cooling plate 410 is not particularly limited. However, the cooling plates 410 can be provided in a plurality of numbers within the battery cell unit 100, and it is preferable to secure the number of the cooling plates 410 to the extent that one side of all the battery cells 110 can be in contact with the cooling plates 410.

Meanwhile, in the case of the cell frame 300 described in FIGS. 3 to 5, or in the case of the cell frame 300 described in FIGS. 12 to 14, a portion corresponding to the upper end part 114b of the battery cell 110 may be opened. When such a cell frame 300 is applied, the upper end part 114b of the battery cell 110 may be in contact with the thermal resin layer 800. That is, the portion corresponding to the upper end part 114b of the battery cell 110 among the cell frame 300 is opened, and the opened upper end part 114b of the battery cell 110 may be in contact with the thermal resin layer 800. Thereby, edge cooling, which discharges heat through the edge portion of the battery cell, may be performed together with surface cooling by the cooling plate 410. In this embodiment, since edge cooling and surface cooling are performed together, thereby achieving more excellent cooling performance.

Meanwhile, in the case of the cell frame 300 described in FIG. 15, since the upper end part 114b of the battery cell 110 is covered by the second frame 320, it cannot come into contact with the thermal resin layer 800, and the additional edge cooling structure as described above cannot be realized. In the case of the cell frame 300 of FIG. 15, instead of giving up the additional cooling performance, all four end parts 114a, 114b, 114c, 114d of the battery cells 110 are covered, so that the battery cells 110 can be fixed more stably.

Meanwhile, referring again to FIGS. 19 to 21, at least one pad member 500 may be disposed in at least one place between the battery cells 110. The pad member 500 may be a member in the form of a foam having thermal insulation properties. The material of the pad member 500 is not particularly limited as long as the pad member 500 has thermal insulation properties and prescribed elasticity. For example, the pad member 500 may include a silicone material or an aerogel material.

In one specific embodiment of the present disclosure, a cooling plate 410 or a pad member 500 may be located between the battery cells 110. Specifically, in the battery cell unit 100, the battery cells 110 are stacked while being covered by the cell frame 300, and either one of the cooling plate 410 or pad member 500 may be located between adjacent battery cells 110. The battery cell 110 coupled to the cell frame 300 may be interposed in the space S between the cooling plate 410 and the pad member 500 (see FIG. 20). FIG. 21 shows that each of the four cell frames 300 is interposed between the cooling plate 410 and the pad member 500. Of course, in FIG. 21, the battery cells 110 do not appear by being hidden by the cell frames 300, but the battery cells 110 are in a state of being located inside the cell frames 300.

Next, the functions of the cell frame 300, the cooling plate 410 of the heat sink 400, and the pad member 500, and the like will be described in more detail.

Referring to FIGS. 3 to 21 together, the cell frame 300 according to this embodiment extends along the edge of each of the battery cells 110 and covers the edges of the battery cells 110, so that one surface of the cell main body 113 of the battery cell 110 is exposed without being hidden by the cell frame 300. The cell frame 300 can stably fix the battery cells 110 and at the same time guide one surface of the cell main body 113 of the battery cells 110 to come into contact with the cooling plate 410 of the heat sink 400. That is, surface cooling of the battery cells 110 in the battery cell stack 120 can be realized by the cell frame 300 and the cooling plate 410. Thereby, the battery pack 1000 according to this embodiment can have excellent cooling performance enough to control heat generation during quick charge.

One surface of the cell main body 113 of the battery cell 110 is in close contact with the cooling plate 410 or the pad member 500. Thus, even if a thermal event or thermal runaway occurs in the battery cell 110, heat propagation and venting gas discharge are hardly performed in the surface direction, that is, in the X-axis or -X-axis direction, which is a direction in which the battery cells 110 are stacked. Therefore, it is highly likely that high-temperature venting gas or particles due to the thermal runaway of the battery cell 110 is discharged through the lower end part 114a, upper end part 114b or both end parts 114c, 114d of the battery cell 110. While the sealing is released at the lower end part 114a and both end parts 114c, 114d provided with the sealing part 114s, it is highly likely that high-temperature venting gas or particles are discharged. In particular, the portion of the sealing part 114s at both end parts 114c, 114d of the battery cell 110 where the electrode lead 111 protrudes is called a terrace part, however, in the conventional battery module, while the seal is mainly released at such a terrace part, the venting gas is discharged.

However, according to this embodiment, the first, third, and fourth frames 310, 330, 340 of the cell frame 300 are in close contact with the lower end part 114a and both end parts 114c, 114d of the battery cell, respectively, so that the venting gas or particles may be restricted from being discharged through the edge of the battery cell 110. Of course, in the cell frame 300 of other embodiments, the upper end part 114b of the battery cell 110 may also be in close contact with the second frame 320.

In the cell frame 300 according to this embodiment, a portion corresponding to the lower end part 114a of the battery cell, i.e., the first frame 310, is provided with a cell vent part 300V that is opened in a downward direction, so that high-temperature venting gas or particles generated during thermal runaway of the battery cell 110 can be guided to be discharged only through the cell vent part 300V. That is, in the battery pack 1000 according to this embodiment, directional venting in the downward direction, i.e., "bottom vent," can be guided by the cell frame 300 provided with the cell vent part 300V. Further, as described above, venting only to the cell vent part 300V can be more clearly realized by the adhesive member 130 attached to a portion excluding the portion corresponding to the cell vent part 300V among the lower part 114a of the battery cell 110.

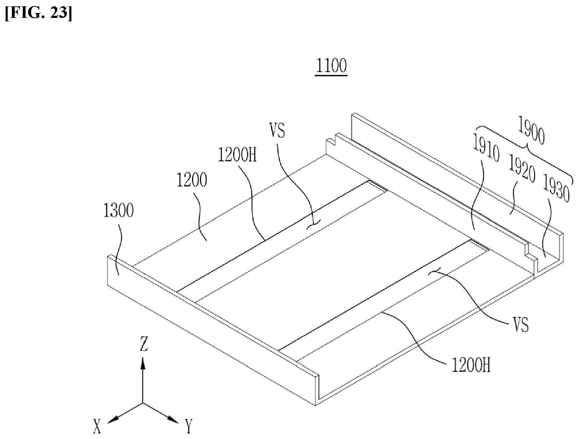

Meanwhile, as will be described later, in a state in which the battery cell stack 120 is stored in the pack frame, the venting gas or particles discharged from the cell vent part 300V may be discharged to the outside of the pack frame via the inside of the bottom frame of the pack frame. This will be described in detail later with reference to FIGS. 23 to 35.

A high voltage current path, such as an HV (High voltage) connection of a busbar or terminal busbar exists in the battery pack 1000. The HV connection is a connection that serves as a power source to supply power that requires high voltage, and refers to an electrical connection between battery cells. The electrical connection between battery cells can be achieved by connecting the electrode lead 111 of the battery cell 110 to a busbar, terminal busbar or the like.

At this time, if high-temperature gas, particles or the like due to the thermal event of the battery cell 110 touch a high-voltage path such as an HV connection, a short circuit or arc discharge may occur, which may lead to additional explosion and flame generation. In particular, the terrace part is a part adjacent to the electrode lead 111, busbar, and the like, and the venting gas discharged through the terrace part may be even more dangerous because it directly affects the HV connection. On the other hand, in the case of the battery pack according to this embodiment, since it has a "bottom vent" structure through the cell vent part 300V as mentioned above, high-temperature gas or particles due to the thermal event may be discharged in the downward direction. In particular, as will be described later, they may be discharged to the outside through the bottom frame of the pack frame. Therefore, there is no risk that high-temperature gas, particles or the like may touch a high-voltage path such as an HV connection, ultimately improving safety against thermal runaway phenomena.

Meanwhile, as previously described, since one surface of the cell main body 113 of the battery cell 110 is in close contact with the cooling plate 410 or the pad member 500, the cooling plate 410 and pad member 500 can minimize thermal propagation of the thermal runaway phenomenon generated in the battery cell 110 to the adjacent other battery cells 110. That is, the cooling plate 410 can realize excellent cooling performance sufficient to control heat generation during quick charge through the surface cooling structure, and at the same time, can prevent thermal propagation between the battery cells 110. In particular, the cooling plate 410 has excellent thermal conductivity, and can lower the thermal runaway temperature of the battery cell 110. Further, since it blocks the lateral direction, it is effective in preventing thermal propagation between the battery cells 110. Similarly, the pad member 500 can also prevent thermal propagation between the battery cells 110. If the pad member 500 contains a material with excellent thermal insulation properties, it can be more effective in preventing heat propagation.

Meanwhile, in the process of repeatedly charging and discharging the battery cells 110, a phenomenon where the internal electrolyte is decomposed and gas is generated so that the battery cells 110 swell up, that is, a swelling phenomenon, may occur. In the swelling phenomenon of the battery cells 110, the battery cells 110 expand in the thickness direction. That is, the battery cells 110 can expand along the direction in which the battery cells 110 are stacked (the direction parallel to the X-axis). The pad member 500 according to this embodiment can control the swelling while absorbing the swelling of the battery cells 110. This makes it possible to prevent the battery cell unit 100 or the battery cell stack 120 from being deformed beyond its deformation limit due to the swelling of the battery cells 110.

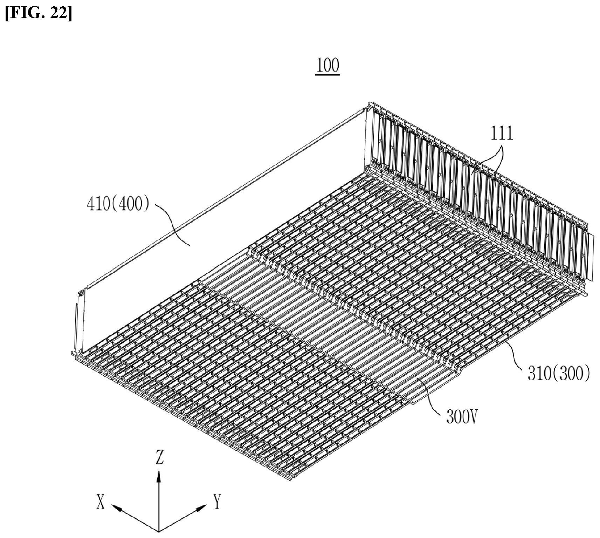

FIG. 22 is a perspective view of a battery cell unit according to one specific embodiment of the present disclosure, as viewed from below.

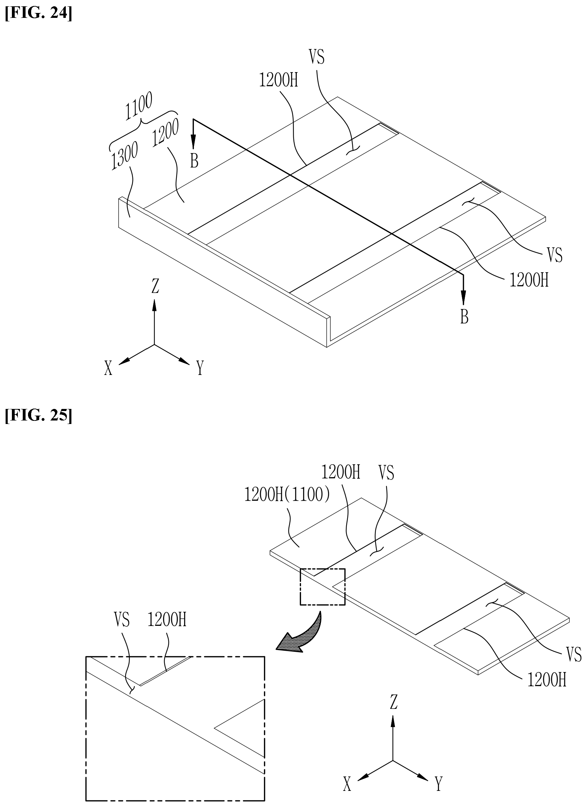

Referring to FIG. 22, the cell vent part 300V may have a shape that protrudes in the downward direction. In particular, the cell vent part 300V may have a shape that protrudes in the direction in which the bottom frame 1200 described later is located and is inserted toward the venting space inside the bottom frame 1200. This will be described again with reference to FIG. 25.

FIG. 23 is a perspective view showing a pack frame included in a battery pack according to one specific embodiment of the present disclosure. FIG. 24 is a perspective view showing a bottom frame and a side surface frame included in the pack frame of FIG. 23.
FIG. 25 is a cross-sectional perspective view taken along the cutting line B-B of FIG. 24.

Referring to FIGS. 1, 4 and 23 to 25 together, the battery pack 1000 according to this embodiment may include a pack frame 1100 in which battery cells 110 are stored, as described above. Specifically, a battery cell stack 120 may be stored in the pack frame 1100.

The pack frame 1100 may include a bottom frame 1200 in which battery cells 110 are placed and a venting space VS is provided. While venting gas is discharged in the battery cells 110, the cell vent part 300V may communicate with the venting space VS of the bottom frame 1200. Specifically, due to thermal runaway in the battery cell 110, while the venting gas is discharged in the battery cell 110, the cell vent part 300V may communicate with the venting space VS of the bottom frame 1200. Thereby, the venting gas may move from the cell vent part 300V to the venting space VS of the bottom frame 1200.

In particular, the cell vent part 300V may has a form that protrudes in the direction in which the bottom frame 1200 is located, and is inserted toward the venting space VS inside the bottom frame 1200. The bottom frame 1200 may have a bottom frame hole 1200H, and while the cell vent part 300V is fitted into the bottom frame hole 1200H, the cell vent part 300V may communicate with the venting space VS. Thereby, the form in which the cell vent part 300V and the venting space VS communicate with each other can be more clearly realized, and venting gas and particles between the cell vent part 300V and the bottom frame 1200 can be minimized from leaking through a gap other than the venting space VS.

The high-temperature venting gas and particles flowing into the venting space VS may be discharged to the outside of the battery pack 1000. The battery pack 1000 according to this embodiment has a so-called "bottom vent" structure that discharges the high-temperature venting gas and particles to the outside using the bottom frame 1200. If the high-temperature venting gas or particles due to the thermal event of the battery cell 110 touch a high-voltage path such as an HV connection, a short circuit or arc discharge may occur, which may lead to additional explosion and flame generation. On the other hand, in the case of the battery pack 1000 according to this embodiment, since it has a "bottom vent" structure as mentioned above, high-temperature gas or particles due to the thermal event may be discharged in a downward direction, i.e., through the bottom frame 1200. Therefore, there is no risk that high-temperature gas, particles or the like may touch a high-voltage path such as an HV connection, ultimately improving safety against thermal runaway phenomena.

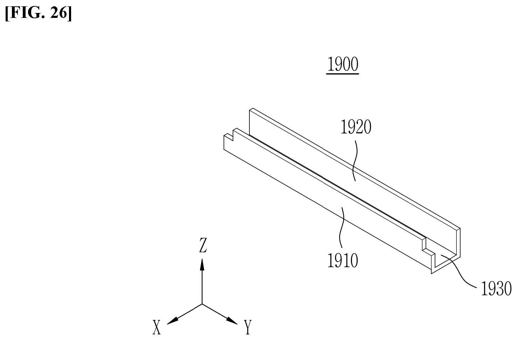

FIG. 26 is a perspective view showing a BMS frame included in the pack frame of FIG. 23.

Referring to FIGS. 1, 23, 24 and 26, the pack frame 1100 according to this embodiment may include a bottom frame 1200 on which a battery cell stack 120 is placed. and a side surface frame 1300 extending upward from one end part of the bottom frame 1200. Meanwhile, the pack frame 1100 according to this embodiment may include a BMS frame 1900 on which a BMS (battery management system) module (not shown) is mounted. A side surface frame 1300 may be located on one side surface of the battery cell stack 120, and a BMS frame 1900 on which a BMS module (not shown) is mounted may be located on the other side surface opposite to one side surface of the battery cell stack 120. That is, the side surface frame 1300 and the BMS frame 1900 may be located on opposite sides to each other with respect to the battery cell stack 120.

The BMS frame 1900 may include a first side surface cover part 1910, a second side surface cover part 1920, and a lower surface cover part 1930. A BMS module (not shown) may be placed on the lower surface cover part 1930, and the first side surface cover part 1910 and the second side surface cover part 1920 may extend upward in both the opposite end parts to each other of the lower surface cover part 1930, respectively.

The BMS module may collect voltage data and temperature data of the battery cells 110 in the battery pack 1000. The BMS module may control the operation of the battery pack 1000 based on the collected voltage data and temperature data.

As described above, in the battery pack 1000 according to this embodiment, the battery cells 110 are mounted directly to the pack frame 1100 in a state in which the edges of the battery cells 110 are covered by the cell frame 300. Specifically, the battery cells 110 are not stored in a separate module frame, but the battery cell unit 100 including the battery cells 110 can be mounted directly to the pack frame 1100 while being placed on the bottom frame 1200 of the pack frame 1100. Since the conventional module frame is removed and the battery cells 110 are mounted directly to the pack frame 1100, the battery pack 1000 according to this embodiment can minimize the packing structure, thereby improving the space utilization and energy density of the battery pack 1000. That is, the battery pack 1000 according to this embodiment may have a so-called CTP (Cell to Pack) structure in which the battery cells 110 are mounted directly to the pack frame 1100.

Instead of removing the conventional module frame, the side surface frame 1300 and the BMS frame 1900 can press the one side surface and the other side surface of the battery cell stack 120, respectively, to fix the battery cell stack 120 in the pack frame 1100. The first side surface cover part 1910 of the BMS frame 1900 can press the other side surface of the battery cell stack 120. Since the battery cells 110 are mounted directly to the pack frame 1100, unnecessary structures are eliminated, which is advantageous in terms of space utilization and energy density. However, as counter-performance to thereto, the battery cell stack 120 within the pack frame 1100 can be vulnerable to vibration or external impact. Therefore, fixing the battery cell stack 120 in the battery pack 1000 of the CTP (Cell to Pack) structure may be an important issue. In this embodiment, the side surface frame 1300 and the BMS frame 1900 located on opposite sides to each other may be configured to press the battery cell stack 120 in a direction toward each other. Thereby, the structural stability of the battery pack 1000 having the CTP (Cell to Pack) structure can be complemented.

Next, a method of manufacturing a battery pack 1000 using the pressing method of the side surface frame 1300 and the BMS frame 1900 will be described.

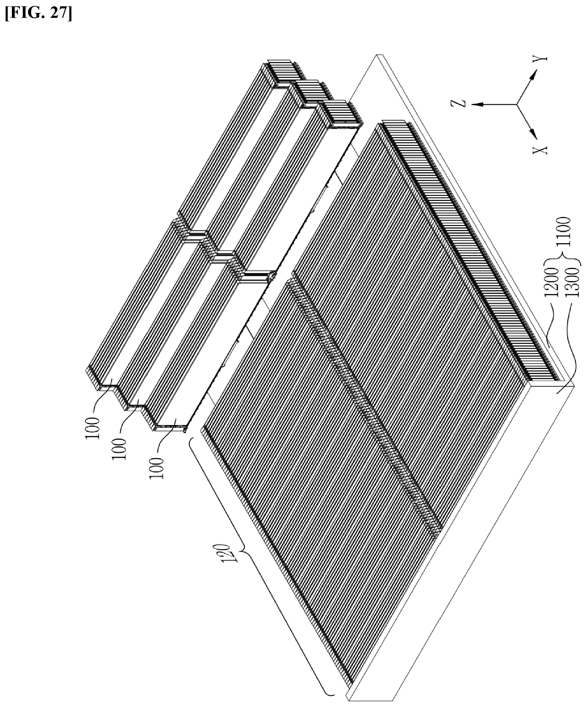

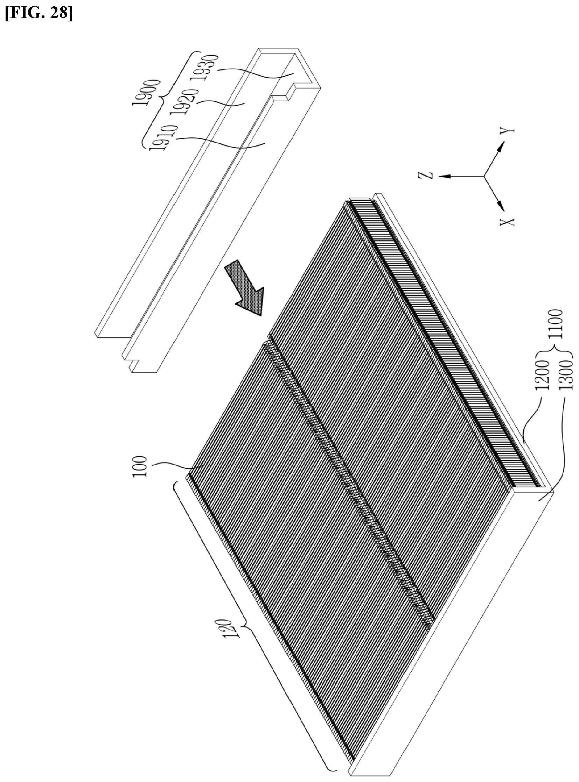

FIGS. 27 and 28 are diagrams for explaining a method of disposing battery cell units in a pack frame.

Referring to FIGS. 1, 4, and 23 to 28 together, a battery cell unit 100 including a plurality of battery cells 110 covered by a cell frame 300 may be disposed on the bottom frame 1200 of the pack frame 1100. At this time, the first battery cell unit 100 may be disposed right next to the side surface frame 1300, and the subsequent battery cell units 100 can be disposed while sequentially pressing in a direction away from the side surface frame 1300.

At this time, the cell vent part 300V of the cell frame 300 may be fitted into the bottom frame hole 1200H while having a protruding shape. That is, in the process of sequentially stacking the battery cell units 100, while the cell vent part 300V is fitted into the bottom frame hole 1200H, each battery cell unit 100 may be properly mounted in the prescribed position. That is, the cell vent part 300V having a protruding shape can not only minimize the leakage of venting gas and particles from the battery cell 110 into gaps other than the venting space VS, but also can function to align the battery cell units 100 in a process of manufacturing the battery pack 1000.

The battery cell stack 120 may be finally formed while the last battery cell unit 100 is placed on the bottom frame 1200, and the battery cell stack 120 may be fixed while the other surface of the formed battery cell stack 120 is pressed by the BMS frame 1900.

In this manner, in the process of manufacturing the battery pack 1000, the side surface frame 1300 and the BMS frame 1900 may press the battery cell stack 120 toward each other. Thereby, the structural stability of the battery pack 1000 having the CTP (Cell to Pack) structure can be complemented.

Meanwhile, this may be followed by a process of connecting the electrode leads 111 of the battery cells 110 to each other through a busbar or the like and a process of applying a thermal resin layer to the upper part of the battery cells 110.

Next, a structure of a pack frame according to other specific embodiments of the present disclosure will be described.

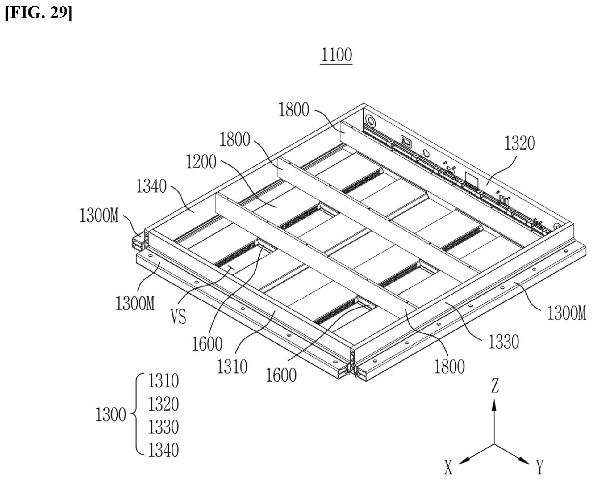

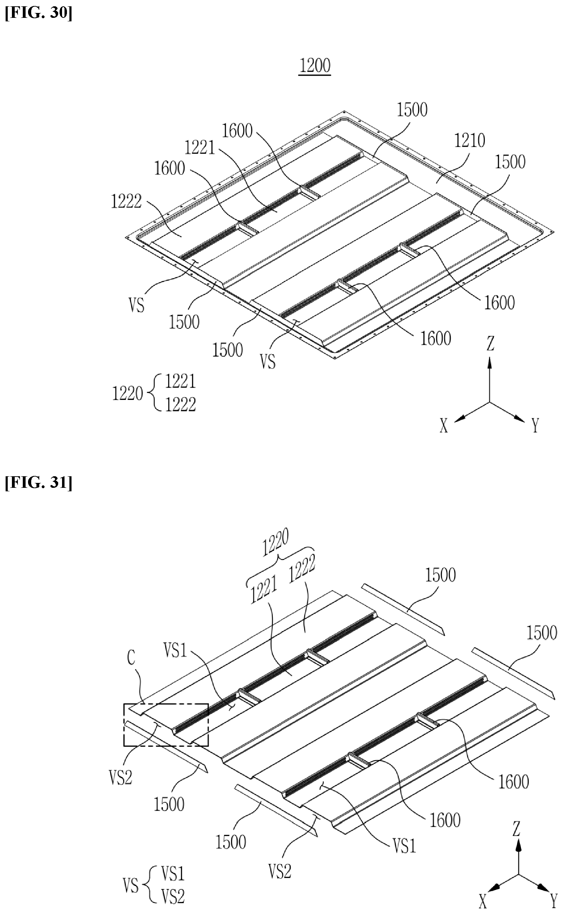

FIG. 29 is a perspective view showing a pack frame according to another specific embodiment of the present disclosure. FIG. 30 is a perspective view showing a bottom frame included in the pack frame of FIG. 29.

Referring to FIGS. 29 and 30, the pack frame 1100 according to this embodiment may include a bottom frame 1200 provided with a venting space VS as described above. Further, the pack frame 1100 may include a side surface frame 1300 extending along the edge of the bottom frame 1200. As an example, the side surface frame 1300 may include a first side surface frame 1310, a second side surface frame 1320, a third side surface frame 1330, and a fourth side surface frame 1340. The first side surface frame 1310, the second side surface frame 1320, the third side surface frame 1330, and the fourth side surface frame 1340 may be disposed along the four sides of the edge of the bottom frame 1200 having a square shape. A storage space with an opened upper part is provided by the bottom frame 1200 and the side surface frame 1300, and battery cells 110 may be disposed in this storage space. After the battery cells 110 are disposed in the storage space, the opened upper part of the storage space may be covered by a pack cover described below. The pack cover may be bonded to the side surface frame 1300 of the pack frame 1100, and as an example, weld bonding or joining using an adhesive can be applied. The battery cells 110 may be sealed by the pack frame 1100 and the pack cover. In addition, a gasket for increasing sealing properties may be interposed between the pack cover and the side surface frame 1300.

Meanwhile, the battery pack 1000 according to this embodiment may include a mounting beam 1300M provided on a side surface frame 1300 to fix the battery pack 1000. As an example, the mounting beams 1300M formed on the side surface frame 1300 are shown in FIG. 29. The mounting beam 1300M may be utilized when mounting the battery pack 1000 on a device. As an example, when mounting the battery pack 1000 on a vehicle device, the mounting beam 1300M may be fixed to the chassis of the vehicle.

Further, the battery pack 1000 according to this embodiment may include a vertical beam 1800 that is located on a bottom frame 1200 and partitions a space where the battery cells 110 are located. As an example, FIG. 29 shows three vertical beams 1800 that partition the storage space into three zones.

A venting space VS is provided in the bottom frame 1200 through which venting gas, particles, and the like discharged from the cell vent part 300V move. The cell vent part 300V of the cell frame 300 may communicate with the venting space VS of the bottom frame 1200. Specifically, while venting gas is discharged from the battery cell 110 due to thermal runaway in the battery cell 110, the cell vent part 300V communicates with the venting space VS of the bottom frame 1200. Thereby, the venting gas can move from the cell vent part 300V to the venting space VS of the bottom frame 1200.

In particular, the cell vent part 300V may be in a form that protrudes in the direction where the bottom frame 1200 is located, and is inserted toward the venting space VS inside the bottom frame 1200. This makes it possible to more clearly realize a form of communicating the cell vent part 300V with the venting space VS, and minimize leakage of the venting gas, particles, and the like through other gaps besides the venting space VS between the cell vent part 300V and the bottom frame 1200.

The high-temperature venting gas and particles that flow into the venting space VS can be discharged to the outside of the battery pack 1000. The battery pack 1000 according to this embodiment has a so-called "bottom vent" structure that discharges high-temperature venting gas and particles to the outside using the bottom frame 1200. A detailed description of the bottom vent structure is omitted because it overlaps with the previously described contents.

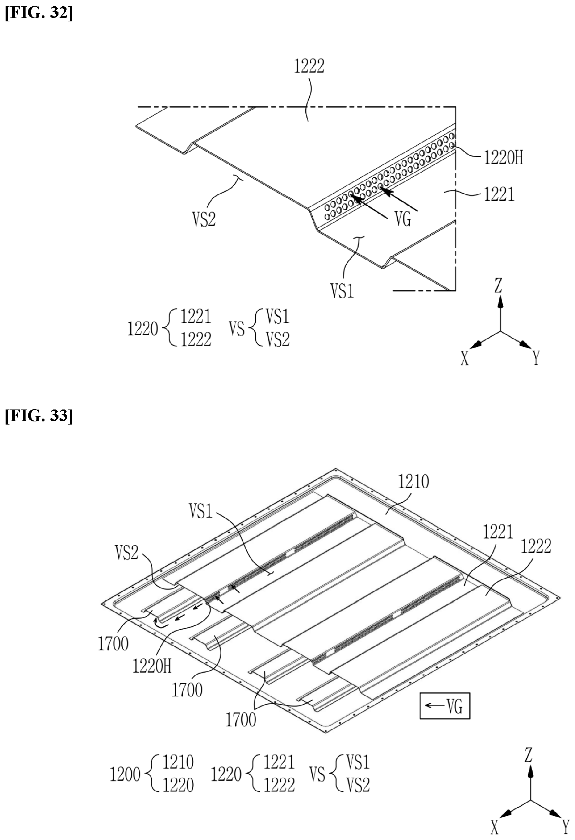

FIG. 31 is a perspective view showing an inner frame and cover plates included in the bottom frame of FIG. 30. FIG. 32 is a partially enlarged diagram showing a portion "C" of FIG. 31.

Referring to FIGS. 29 to 32 together, a bottom frame 1200 according to one specific embodiment of the present disclosure may include an outer frame 1210 and an inner frame 1220 located on the upper part of the outer frame 1210. The outer frame 1210 may be a plate located at the lowest end of the battery pack 1000, and this outer frame 1210 may be coupled with a side surface frame 1300.

The inner frame 1220 is a plate-shaped member, but may include a concave part 1221 and a convex part 1222. In the inner frame 1220, the concave part 1221 and the convex part 1222 may be alternately disposed along the Y-axis direction. Meanwhile, in order to form a venting space VS, a cover plate 1500 or the like may be coupled to both side surfaces of the inner frame 1220. The inner frame 1220 and the cover plate 1500 may be coupled by a method such as welding.

The venting space VS according to this embodiment may include a first venting space VS1 and a second venting space VS2. Specifically, a portion where the concave part 1221 of the inner frame 1220 is surrounded by the cover plate 1500 and the battery cell stack 120 may correspond to the first venting space VS1. The venting gas discharged from the cell vent part 300V may move to the first venting space VS1.

Further, a portion where the convex part 1222 of the inner frame 1220 is surrounded by the cover plate 1500 may correspond to the second venting space VS2. Further, the inner frame 1220 may include a plurality of filtering holes 1220H that communicate the first venting space VS1 and the second venting space VS2. That is, the venting gas VG flowing into the first venting space VS1 may move to the second venting space VS2 via the filtering holes 1220H. Particles, ash, byproducts, and the like contained in the high-temperature venting gas VG may be primarily filtered out while passing through the filtering holes 1220H. That is, in the case of the bottom frame 1200 according to this embodiment, the venting space VS is partitioned into a first venting space VS1 and a second venting space VS2, and the first venting space VS1 and the second venting space VS2 are connected through a filtering hole 1220H, thereby exerting the function of primarily filtering high-temperature venting gas VG.

Meanwhile, a gas shield 1600 may be disposed in the concave part 1221 of the inner frame 1220. Specifically, a gas shield 1600 may be disposed in the concave part 1221 to separate the first venting space VS1 located under one battery cell unit 100 from the first venting space VS1 located under another battery cell unit 100.

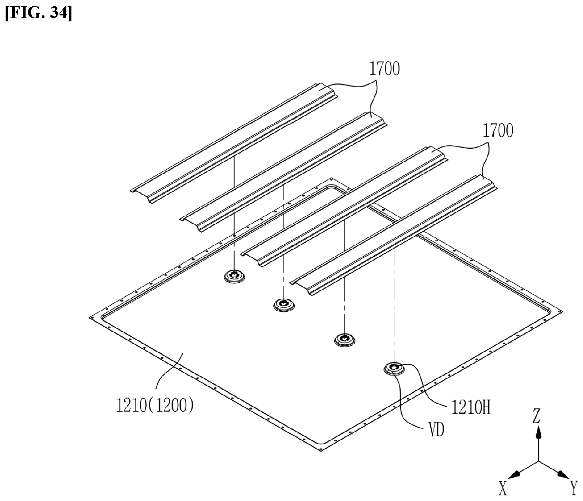

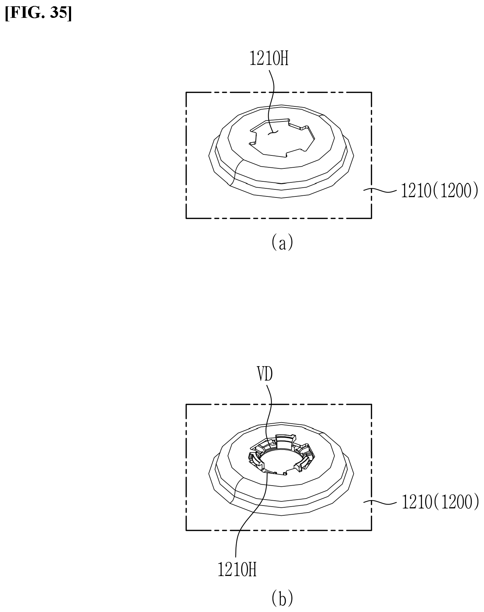

FIG. 33 is a perspective view showing a state in which a part of the inner frame is removed in the bottom frame of FIG. 30. FIG. 34 is a perspective view showing an outer frame and routing plates of the bottom frame of FIG. 30. FIG. 35(a) is a partial diagram showing an outer frame hole, and FIG. 35(b) is a partial diagram showing a venting device coupled to the outer frame hole.

Referring to FIGS. 31 to 35 together, a routing plate 1700 may be located inside the convex part 1222 of the inner frame 1220, i.e., in the second venting space VS2. The routing plate 1700 may have a structure that has an inner space and continues along one direction (a direction parallel to the X-axis).

The battery pack 1000 may include a venting device VD provided in the pack frame 1100. As an example, an outer frame hole 1210H may be formed in the outer frame 1210, and a venting device VD may be mounted in the outer frame hole 1210H. The venting device VD is a general term for a member or mechanism that is provided to discharge venting gas, etc. As an example, the venting device VD may be a valve structure that opens or bursts when the internal pressure is at or above the prescribed level.

At this time, the outer frame hole 1210H and the venting device VD may be located in the internal space of the routing plate 1700. Thereby, as shown in FIG. 32, the venting gas VG flowing into the second venting space VS2 through the filtering hole 1220H may be bent multiple times while moving into the interior of the routing plate 1700, as shown in FIG. 33.

In this manner, as the routing plate 1700 is provided inside the second venting space VS2, the venting gas VG or particles flowing into the second venting space VS2 move along the long venting path and are bent multiple times along the path. While the venting gas VG flows along the long path by the routing plate 1700, the temperature of the venting gas VG or particles may be lowered. Therefore, it is possible to prevent the venting gas VG or particles from triggering an explosion. Further, as the path of the venting gas VG is lengthened, oxygen flowing in from the outside of the battery pack 1000 may be blocked from meeting the venting gas, etc., thereby preventing an explosion from occurring. Further, large particles may be filtered out in the long path.

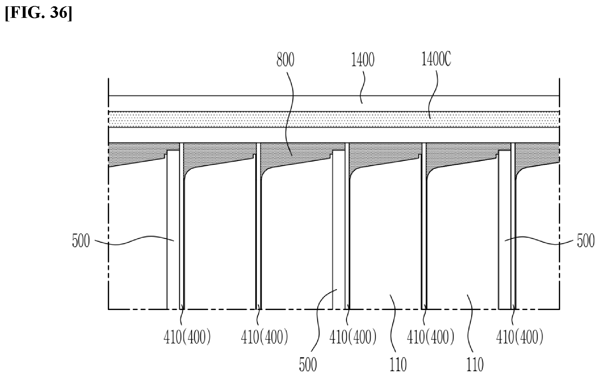

FIG. 36 is a partial cross-sectional view of a battery pack according to one specific embodiment of the present disclosure.

Referring to FIGS. 16, 17 and 36 together, as described above, a thermal resin layer 800 formed by applying a thermal resin may be located on the upper part of the battery cells 110. A pack cover 1400, which covers the upper part of the pack frame 1100 and through which the coolant flows inside, may be located on the upper part of the thermal resin layer 800. That is, a cooling flow path 1400C through which a coolant flows may be formed inside the pack cover 1400 covering the upper part of the pack frame 1100. At this time, the thermal resin layer 800 may be in direct contact with the pack cover 1400.

The cooling plate 410 is in the form of a plate and cools the battery cell 110 by a surface cooling method, and the heat generated in the battery cell 110 passes through the cooling plate 410 and the thermal resin layer 800 in sequence, and is transferred to the pack cover 1400 having a cooling passage 1400C formed therein. That is, the heat generated in the battery cell 110 may be finally cooled by the pack cover 1400. In the case of the battery pack 1000 according to this embodiment, it may be structured such that the heat generated in the battery cell 110 is finally discharged and cooled through the upper part of the battery pack 1000.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The battery pack according to this embodiment described above may include various control and protection systems such as a battery management system (BMS), a battery disconnect unit (BDU), and a cooling system.

The battery pack may be applied to various devices. Specifically, it can be applied to transportation vehicles such as an electric bike, an electric vehicle, and a hybrid electric vehicle, or an ESS (Energy Storage System) and may be applied to various devices capable of using secondary batteries, without being limited thereto.

Although the invention has been described in detail with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

100: battery cell unit
110: battery cell
120: battery cell stack
300: cell frame
300V: cell vent part
400: heat sink
410: cooling plate
500: pad member
1000: battery pack
1100: pack frame
1200: bottom frame
1300: side surface frame
1400: pack cover

## Claims

1. A battery pack comprising:
a plurality of battery cells that are stacked along one direction;
cell frames that extend along edges of the battery cells and cover edges of the battery cells; and
a pack frame in which the battery cells are stored,
wherein the battery cells are mounted directly to the pack frame in such a state that the edges of the battery cells are covered by the cell frames.

2. The battery pack according to claim 1, wherein:
one of the cell frames covers the edges of the plurality of battery cells,
the plurality of battery cells covered by one of the cell frames are located along a longitudinal direction, and
the longitudinal direction is a direction parallel to the direction in which electrode leads protrude from the battery cells.

3. The battery pack according to claim 2, wherein:
the cell frames include a first frame that covers the lower end part of the battery cells; a third frame that covers one end part of any one of the battery cells; and a fourth frame that covers one end part of the other part of the battery cells.

4. The battery pack according to claim 3, wherein:
a portion corresponding to the upper end part of the battery cells among the cell frames is opened,
a thermal resin layer formed by applying thermal resin is located one an upper part of the battery cells, and
the upper end part of the battery cells is in contact with the thermal resin layer.

5. The battery pack according to claim 1, wherein:
the cell frame includes a first frame that covers the lower end part of the battery cells; and a third frame and a fourth frame that cover both end parts of the battery cells, respectively.

6. The battery pack according to claim 5, wherein:
the cell frame includes a second frame that covers the upper end part of the battery cell.

7. The battery pack according to claim 1, wherein:
a cell vent part is formed in a portion corresponding to the lower end part of the battery cells among the cell frames.

8. The battery pack according to claim 7, wherein:
the pack frame includes a bottom frame in which the battery cells are placed and a venting space is provided, and
the cell vent part communicates with the venting space of the bottom frame while the venting gas is discharged from the battery cells.

9. The battery pack according to claim 7, wherein:
an adhesive member is attached to a portion excluding a portion corresponding to the cell vent part among the lower end part of the battery cell.

10. The battery pack according to claim 7, wherein:
the battery cell includes an electrode assembly and a pouch case that stores the electrode assembly, and
the lower end part of the battery cell is a sealing part formed by sealing the end part of the pouch case.

11. The battery pack according to claim 1, wherein:
while adjacent cell frames are coupled to each other, the battery cells located therein are fixed.

12. The battery pack according to claim 1, wherein:
at least one cooling plate is disposed in at least one place between the battery cells.

13. The battery pack according to claim 12, wherein:
a thermal resin layer formed by applying a thermal resin is located on the upper part of the battery cells, and
the upper end part of the cooling plate is in contact with the thermal resin layer.

14. The battery pack according to claim 1, wherein:
the battery cells are stacked along the one direction to form a battery cell stack,
the pack frame includes a bottom frame on which the battery cell stack is placed and a side surface frame extending upward from one end part of the bottom frame, and
the side surface frame is located on one side surface of the battery cell stack, and a BMS frame on which a BMS (Battery Management System) module is mounted is located on the other side surface opposite to the one side surface of the battery cell stack.

15. The battery pack according to claim 14 wherein:
the side surface frame and the BMS frame press the one side surface and the other side surface of the battery cell stack, respectively.

16. A device comprising a battery pack according to claim 1.
